(19) Europäisches Patentamt
European Patent Office
Office européen des brevets

(11) **EP 2 615 385 B1**

(12) **EUROPÄISCHE PATENTSCHRIFT**

(45) Veröffentlichungstag und Bekanntmachung des Hinweises auf die Patenterteilung:
**23.06.2021  Patentblatt 2021/25**

(51) Int Cl.:
*F24D 12/02* *(2006.01)*     *F24D 19/10* *(2006.01)*
*F25B 25/00* *(2006.01)*

(21) Anmeldenummer: **12000192.0**

(22) Anmeldetag: **13.01.2012**

(54) **Systemmanager für leistungsgeregelte Energiewandler**

System manager for energy converters with adjustable power

Gestionnaire système pour convertisseurs d'énergie réglés en fonction de la puissance

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.07.2013  Patentblatt 2013/29**

(73) Patentinhaber: **Stiebel Eltron GmbH & Co. KG
37603 Holzminden (DE)**

(72) Erfinder:
• **Wagner, Enno Dr.
37671 Höxter (DE)**
• **Üpping, Johannes Dr.
32839 Steinheim (DE)**
• **Grünig, Lutz
37603 Holzminden (DE)**

(74) Vertreter: **Eisenführ Speiser
Patentanwälte Rechtsanwälte PartGmbB
Am Kaffee-Quartier 3
28217 Bremen (DE)**

(56) Entgegenhaltungen:
**EP-A1- 0 108 699        EP-A1- 2 063 191
EP-A2- 2 189 729        EP-A2- 2 236 946
DE-A1-102008 004 126    US-A1- 2008 023 564**

• **None**

EP 2 615 385 B1

**Beschreibung**

Die Erfindung betrifft ein Verfahren zum Regeln zumindest eines Energiewandlers zur Bereitstellung von Wärme- oder Kälteleistung.

In modernen Heizungsanlagen müssen zum Teil mehrere unterschiedliche Verteilsysteme mit Wärmesenken, wie beispielsweise mehrere Heizkreise, Pufferspeicher, Warmwasserspeicher und/oder ein Schwimmbad mit Wärme oder auch Kälte versorgt werden. Für die Wärme- oder Kälteerzeugung stehen verschiedene Energiewandler wie Solarkollektoren, Wärmepumpen, Gas-/Öl-/Holz-Kessel und elektrische Zusatzheizungen zur Verfügung, wobei auch mehrere Geräte in Kaskaden betrieben werden. Mit Solaranlagen wird Wärme oder auch elektrische Energie erzeugt, somit Umweltenergie gewandelt.

Bisherige Kaskadenregelungen betreiben im Wesentlichen Wärmeerzeuger im ON/OFF Betrieb. Das bedeutet, die einzelnen Wärmepumpen oder Heizkessel können lediglich ein- und ausgeschaltet werden. Im eingeschalteten Betrieb bringen die Wärmeerzeuger folglich einen Festwert der Leistung oder die maximale Leistung, auch wenn hierdurch nicht die optimale Effizienz der einzelnen Maschine erzielt werden kann. Zudem werden bestimmte Maschinen häufig bevorzugt eingeschaltet, so dass unterschiedliche Laufzeiten zu einem ungleichmäßigen Verschleiß der Maschinen führen.

EP 2 063 191 A1 beschreibt ein Verfahren zum Regeln eines Energiewandlers zur Bereitstellung von Wärmeenergie. Ein Wärmeleistungsbedarf eines Verteilsystems wird ermittelt. Ferner werden mehrere Wärmeleistungsangebote des Energiewandlers ermittelt und aus diesen wird die möglichst günstige Kombination ausgewählt.

EP 0 108 699 A1 beschreibt ein Verfahren zum Regeln eines Energiewandlers zur Bereitstellung von Wärmeleistung in einem Verteilsystem, Der Wärmeleistungsbedarf des Verteilsystems wird ermittelt und der Energiewandler wird zur Erzeugung des Wärmeleistungsangebotes gesteuert.

EP 2 189 729 A1 beschreibt ein Verfahren zum Betrieb einer Heizungsanlage mit einem ersten und zweiten Wärmeerzeuger mit unterschiedlichen Leistungsbereichen. Die Wärmeerzeuger werden jeweils in einem Modulationsbereich zwischen einer minimalen und maximalen Leistung betrieben Der erste Wärmeerzeuger weist eine kleinere maximale Leistung, aber einen höheren Wirkungsgrad als der zweite Wärmeerzeuger auf. Der erste Wärmeerzeuger wird zur Deckung einer Grundlast und der zweite Wärmeerzeuger zur Deckung einer Spitzenlast verwendet.

Die Aufgabe der Erfindung besteht darin, Wärme oder Kälte auf möglichst energieeffiziente und kostenoptimale Weise bereitzustellen und die Energieerzeuger verschleißarm zu betreiben.

Gelöst ist die Aufgabe durch ein Verfahren zum Regeln zumindest zweiter Energiewandler gemäß Anspruch 1.

Bei einem nicht erfindungsgemäßen Verfahren zum Regeln von mindestens zwei Energiewandlern wird von einem Systemmanager ein Wärme- oder Kälteleistungsbedarf von wenigstens einem Verteilsystem abgefragt. Weiterhin werden Wärme- oder Kälteleistungsangebote von wenigstens einem Energiewandler ermittelt. Für den Wärme- oder Kälteleistungsbedarf wird ein Wärme- oder Kälteleistungsangebot ausgewählt. Wenigstens ein erster Energiewandler verwendet elektrischen Strom zur Erzeugung von Wärme- oder Kälteleistungsangeboten zur Deckung des Wärme- oder Kälteleistungsgbedarfs des Veteilsystems. Wenigstens zwei Wärme- oder Kälteleistungsangebote der wenigstens zwei Energiewandler werden ermittelt. Aus den wenigstens zwei Wärme- oder Kälteleistungsangeboten zweier Energiewandler wird für den Wärme- oder Kälteleistungsbedarf des Verteilsystems eine möglichst günstige Kombination ausgewählt. Für den wenigstens einen ersten Energiewandler wird jedem Wärme- oder Kälteleistungsangebot eine elektrische Leistungsaufnahme des ersten Energiewandlers und eine der elektrischen Leistungsaufnahme zugeordnete Preisstufe zugeordnet. Die Energiewandler werden abhängig von den ausgewählten Angeboten einen Sollwert des Energiewandlers entsprechend der Kombination einstellen. Die Kombination wird basierend auf den aktuellen Strompreisen für das jeweilige Wärme- oder Kälteleistungsangebot ausgewählt. Jedem der wenigstens zwei Wärme- oder Kälteleistungsangebote wird ein wählbarer Gewichtungskoeffizient zugeordnet.

In einem vorteilhaften Ausführungsbeispiel wird vom Systemmanager eine Auswahl eines der Wärme- oder Kälteleistungsangebote, abhängig von Angebotskategorien des mindestens einen Energiewandlers auf der Basis von Konfigurationsinformationen über eine optimierte, insbesondere preisoptimierte Ansteuerung der Verteilsysteme und der Energiewandler, getroffen.

Gemäß einem Gedanken der Erfindung erfolgt in einem Verfahrensschritt eine Simulation zukünftiger Entwicklungen der Wärme- oder Kälteleistungsangebote abhängig von WetterPrognosedaten und vorzugsweise flexiblen Energie-Tarifen und davon abhängig wird wenigstens ein Sollwert angepasst.

Somit werden auf die jeweiligen Randbedingungen die günstigsten Energiewandler oder deren Module bevorzugt betrieben und der Betrieb der teuren Erzeuger möglichst vermieden. Da insbesondere moderne Wärmepumpen aber auch Gas-/Öl-Kessel leistungsgeregelt betrieben werden, wird eine optimale Kombination von Ansteuerungspegeln der unterschiedlichen Energiewandler eingestellt. Darüber hinaus werden flexible Energietarife und Wettervorhersagen als Prognosedaten vorteilhaft verwendet um Sollwerte für die Zukunft vorherzusagen und aktuelle Sollwerte einzustellen.

Vorzugsweise kennzeichnend für die Durchführung des Verfahrens ist eine verteilte und modular aufgebaute Struktur des Systemmanagers. Über ein Kommunikationssystem, insbesondere einen leistungsstarken Bus, insbesondere ein CAN Bus, sind verschiedene Module des Energiewandlers oder des Verteilsystems, miteinander verbunden. Die Module nehmen vor Ort über Sensoren Messwerte, insbesondere Temperaturen, Drücke, Volumenströme oder ähnliche Messwerte von Sensoren auf und steuern Aktoren wie Pumpen, Ventile oder den Energiewandler mit seinen Sensoren. Insbesondere wird wenigstens ein Sollwert, mit dem der Energiewandler oder das Verteilsystem betrieben, abhängig von den Wärme- oder Kälteleistungsangeboten eingestellt oder geändert. Die Module sind elektronische Module, die einem Gerät wie einer Wärmepumpe, einen Kessel, einer Solaranlage oder den Komponenten des Verteilsystems zugeordnet sind oder in den Geräten integriert sind.

Gemäß einem Gedanken der Erfindung befinden sich im Verteilsystem verschiedene Wärme-/Kältesenken, die beispielsweise in Form von Modulen verschiedene Heizkreise, Warmwasserspeicher, Pufferspeicher oder ein Schwimmbad darstellen. Diese Module des Verteilsystems erfassen zum einen den aktuellen Wärme- oder Kältebedarf des jeweiligen Geräts und steuern zum anderen verschiedene Aktoren an. Gegenüber stehen verschiedene Energiewandler zu Erzeugung von Wärme oder Kälte wie beispielsweise Solaranlagen, Wärmepumpen, Öl-/Gas-/Holz-/Pellets-Kessel oder elektrische Heizgeräte, die ebenfalls Module darstellen. Je nach Außentemperatur, aktuellen Strom- und Brennstoffpreisen und geforderter Vorlauftemperatur können diese leistungsvariablen Module Wärme- oder Kälteleistungen in unterschiedlichen Kategorien abgeben, insbesondere Preis-/Leistungskategorien. Insbesondere bei drehzahlgeregelten Luft-Wasser-Wärmepumpen ist die Leistungszahl (COP) stark abhängig von Vorlauftemperatur, Außentemperatur und Verdichterdrehzahl. Bei einer gegebenen Vorlauftemperatur können folglich bei unterschiedlichen Drehzahlen verschiedene Angebote mit unterschiedlichen Leistungen und unterschiedlichen COPs abgegeben werden.

In einem vorteilhaften Verfahren erfolgt die Abfrage des Kälte- oder Wärmeleistungsangebots wenigstens eines Energiewandlers, welcher wenigstens ein erstes Wärmepumpenmodul und ein zweites Wärmepumpenmodul aufweist. Die Wärmepumpenmodule enthalten jeweils eine leistungsgeregelte Wärmepumpe, insbesondere eine invertergeregelte Wärmepumpe. Jede invertergeregelte Wärmepumpe ist mit jeweils wenigsten einem Verdichter ausgestattet, welcher mit variablen Drehzahlen betrieben werden kann. Von jedem Wärmepumpenmodul, welches vorzugsweise jeweils einer Wärmepumpe zugeordnet ist, oder Bestandteil einer Wärmepumpe ist, werden Wärme- oder Kälteleistungsangebote (im Beispiel Wärmeangebote $\dot{Q}_{w1}$, $\dot{Q}_{w2}$) bei unterschiedlichen Drehzahlen der Verdichter insbesondere vom Systemmanager ermittelt. Eine günstige Kombination der Wärme- oder Kälteleistungsangebote der Wärmepumpenmodule wird für die Deckung des Gesamtwärmebedarfs $\dot{Q}_{ges}$ ausgewählt. Die Verdichter der Wärmepumpenmodule bzw. der Wärmepumpen werden mit den zu der ausgewählten Kombination, entsprechend der Wärme- oder Kälteleistungsangebote, zugehörigen Drehzahlen betrieben.

Beispielhaft erfolgt vorteilhaft ein Ablauf des Verfahrens so, dass die beiden Wärmepumpen (Beispiel: WP1, WP2) jeweils eine Leistung von 10 kW haben, der bereitstehende Energiewandler hat somit eine maximale Gesamtleistung von 20 kW. Der Wärmebedarf $\dot{Q}_{ges}$ des Verteilsystems soll im Beispiel 10 kWh in einer nächsten Stunde betragen. Folgende Angebote der Wärmepumpenmodule für die nächste Stunde werden ermittelt:

Wärmeangebote $\dot{Q}_{w1}$, $\dot{Q}_{w2}$ der beiden WP1 und WP2 jeweils:

$Q_{w2;\ 10\ kW}$, $\dot{Q}_{w2;10\ kW}$: 10 kWh -> 0,50 €

$\dot{Q}_{w1;\ 8\ kW}$, $\dot{Q}_{w2;\ 8\ kW}$: 8kWh -> 0,39 €

$\dot{Q}_{w1;\ 6\ kW}$, $\dot{Q}_{w2;\ 6\ kW}$: 6 kWh -> 0,28 €

$\dot{Q}_{w1;\ 5\ kW}$, $\dot{Q}_{w2;\ 5\ kW}$: 5 kWh -> 0,22 €

$\dot{Q}_{w1;\ 4\ kW}$, $\dot{Q}_{w2;\ 4\ kW}$: 4 kWh -> 0,18 €

$\dot{Q}_{w1;\ 2\ kW}$, $\dot{Q}_{w2;\ 2\ kW}$: 2 kWh -> 0,1 €

Auswahl der Kombinationen:

WP1 oder WP2 liefern 10 kWh allein -> 0,50 €

WP1 liefert 8 kWh + WP2 liefert 2 kWh -> 0,39 €+0,1 €=0,49 €

WP1 liefert 6 kWh + WP2 liefert 4 kWh -> 0,28 €+0,18 €= 0,46 €

WP1 liefert 5 kWh + WP2 liefert 5 kWh -> 0,22 €+0,22 €=0,44 €

Die günstigste Lösung im Beispiel ist die Kombination $K_{best}$, diese Kombination wird ausgewählt. Die der Angebotskombination $K_{best}$ ="WP1 liefert 5 kWh + WP2 liefert 5 kWh" entsprechenden Betriebsparameter der Wärmepumpen werden vorgegeben.

Eine Auswahl eines der Wärme- oder Kälteleistungsangeboten wird vorteilhaft abhängig von Angebotskategorien, insbesondere verschiedenen Werten oder Preisstufen, des mindestens einen Energiewandlers auf der Basis von Konfigurationsinformationen des Energiewandlers und/oder des Verteilsystems über eine optimierte, insbesondere preisoptimierte Ansteuerung der Verteilsysteme und der Erzeugungssysteme getroffen.

Gemäß einem Gedanken der Erfindung erfolgt eine Simulation zukünftiger Entwicklungen der Wärme- oder Kälteleistungsangebote, insbesondere abhängig von Wetterdaten, Prognosedaten oder flexiblen Energie-Tarifen und abhängig davon erfolgt eine Anpassung wenigstens eines Sollwerts.

Die Figuren zeigen wie folgt:

Fig. 1:    Regelung mit einem Systemmanager mit einem Energiewandler für mehrere geregelte Module als Wärmeerzeuger in Verbindung mit einem Verteilsystem mit mehreren Modulen als Wärmesenken.

Fig. 2:    Beispielhafte Darstellung der Wärmeangebote und des Bedarfs.

Fig. 3:    Zwei ausgewählte Möglichkeiten den Wärmebedarf zu erfüllen. Hier ist zu sehen, dass die Erste günstiger sein wird als die Zweite.

Fig. 4:    Darstellung der Anzahl der Möglichkeiten und deren Verringerung im Laufe des Prozesses.

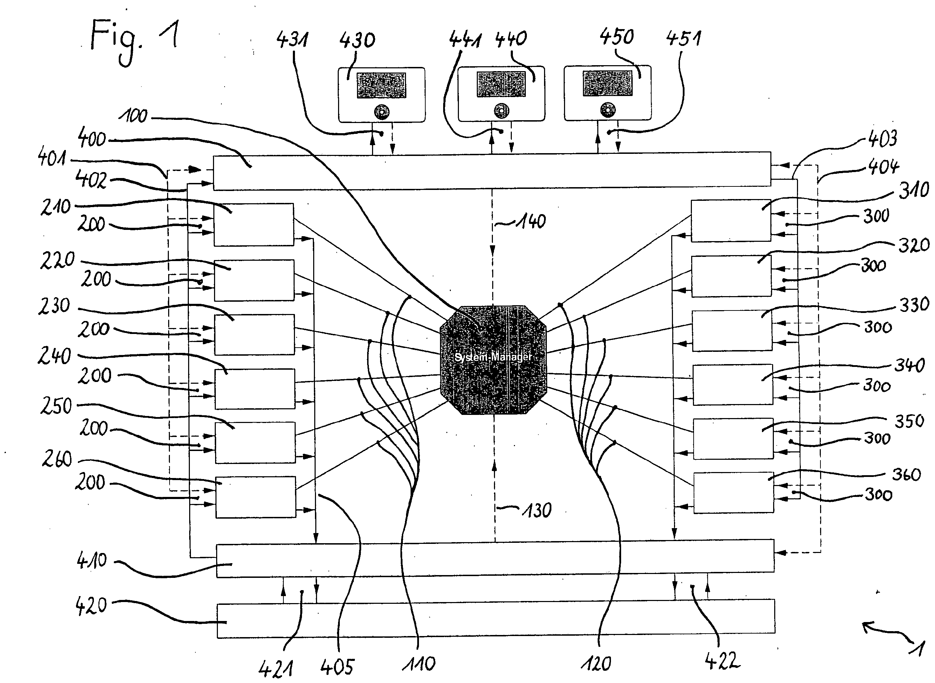

Figur 1 zeigt eine Regelung 1 mit einem Systemmanager 100. An dem Systemmanager 100 sind über Verbindungen 110 verschiedene Module 210-260 eines oder mehrerer Verteilsysteme verbunden. Das Verteilsystem weist ein erstes Heizkreismodul 210, ein zweites Heizkreismodul 220, ein drittes Heizkreismodul 230, ein erstes Warmwassermodul 240, ein zweites Warmwassermodul 250 und ein Schwimmbadmodul 260 auf. Die Module 210, 220, 230, 240, 250 und 260 sind über Verbindungen 200 mit einem Speicher 400 für Parameter- und Prozesswerte verbunden. Über eine Verbindung 402 werden die Prozesswerte, und über eine Verbindung 401 die Parameter zwischen dem Speicher 400, den Modulen 210, 220, 230, 240, 250, 260, sowie einer Konfigurationsebene 410 ausgetauscht. Die Konfigurationsebene 410 erhält weiterhin über eine Verbindung 405 von den Modulen 210, 220, 230, 240, 250, 260 Prozesswerte des Verteilsystems.

Der Systemmanager ist weiterhin über Verbindungen 120 mit Modulen 310-360 eines oder mehrerer Energiewandler verbunden. Im Ausführungsbeispiel besteht der Energiewandler aus einem Solarmodul 310, einem ersten Wärmepumpenmodul 320, einem zweiten Wärmepumpenmodul 330, einem Lüftungsmodul 340, einem Durchlauferhitzer 350 sowie einem Öl- oder Gasbrennermodul 360. Parameter- und Prozesswerte werden über Datenverbindungen 300 mit dem Speicher 400 für Parameter- und Prozesswerte ausgetauscht, was vorzugsweise mittels einer Verbindung 403 und 404 erfolgt.

Die Verbindungen und Datenverbindungen erfolgen vorzugsweise drahtgebunden oder drahtlos, per Funk oder ähnlichen Datenübertragungsmethoden. Im Ausführungsbeispiel sind die Module 210-260 und 310-360, der Systemmanager 100 sowie der Speicher 400 für Parameter- und Prozesswerte und die Konfigurationsebene 410 mit einem CAN Bus verbunden. Vorzugsweise über den CAN Bus erhält der Systemmanager 100 Parameterwerte über eine Verbindung 140 vom Speicher 400 sowie über eine Verbindung 130 von der Konfigurationsebene 410. Prozesswerte werden zwischen einer Treiberebene 420 und der Konfigurationsebene 410 ausgetauscht. Hierzu ist eine Verbindung 421, insbesondere für die Daten der Module 210-260 und eine Verbindung 422, insbesondere für die Daten der Module 310-360 vorgesehen.

Der Datenaustausch erfolgt vorteilhaft bidirektional für Prozesswerte zwischen der Konfigurationsebene 410 und der Treiberebene 420.

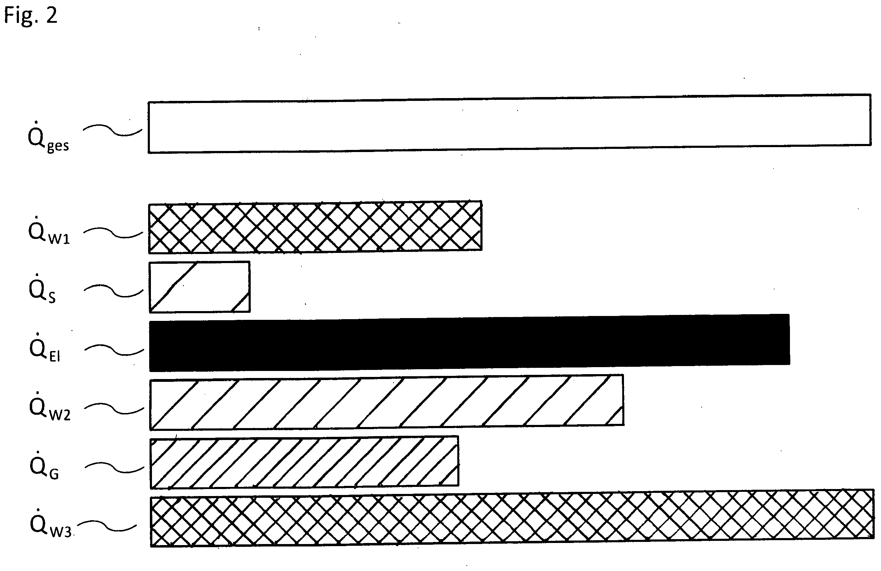

In Figur 2 zeigt $\dot{Q}_{ges}$ den gesamten erforderlichen Wärmebedarf. Demgegenüber stehen verschiedene Wärmeangebote $\dot{Q}_{w1}$, $\dot{Q}_S$, $\dot{Q}_{el}$, $\dot{Q}_{w2}$, $\dot{Q}_G$, $\dot{Q}_{w3}$ mit verschiedenen Preisstufen "I", "II", "III", "IV" und "V". $\dot{Q}_{w1}$ ist das Wärmeangebot eines ersten Wärmepumpenmoduls 320 mit der Preisstufe "II". $\dot{Q}_S$ ist das Wärmeangebot des Solarmoduls 310 mit der Preisstufe "I". $\dot{Q}_{el}$ ist das Wärmeangebot mit der Preisstufe "V". $\dot{Q}_{w2}$ ist das Wärmeangebot des ersten Wärmepumpenmoduls 320 mit der Preiskategorie "III". $\dot{Q}_G$ ist das Wärmeangebot des Moduls Öl- oder Gasbrenner 360 mit dem der Preisstufe "IV". $\dot{Q}_{w3}$ ist das Wärmepumpenmodul mit einem Wärmeangebot in der Preisstufe "II".

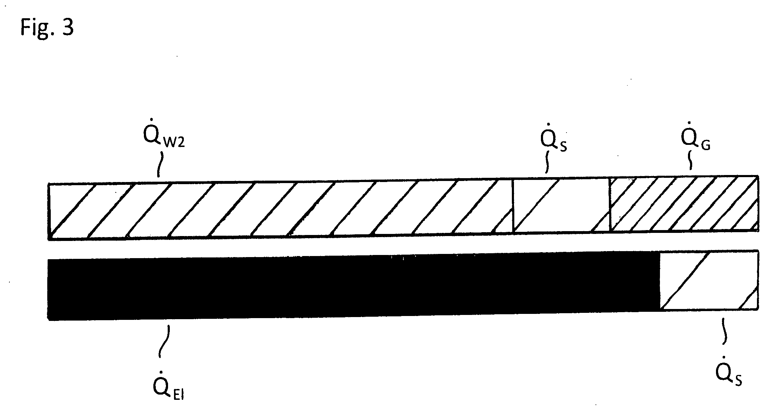

Figur 3 zeigt verschiedene Kombination zur Erfüllung des Wärmebedarfs, die sich wie folgt zusammensetzen: Erstes Wärmepumpenmodul $\dot{Q}_{w2}$ mit der Preisstufe "III", in Kombination mit dem Wärmeangebot $\dot{Q}_S$ des Solarmoduls 310 der Preisstufe "I" und in Kombination mit dem Wärmeangebot $\dot{Q}_G$ des Öl-/Gaskesselmoduls 360 in der Preisstufe "IV" ergibt sich ein Vergleich mit dem Modul 350 mit der elektrischen Stufe $\dot{Q}_{el}$ mit der Preisstufe "V", in Kombination mit dem Wärmeangebot des Solarmoduls 310 in der Preisstufe "I". $\dot{Q}_G$ wird geliefert, allerdings zu unterschiedlichen Kosten.

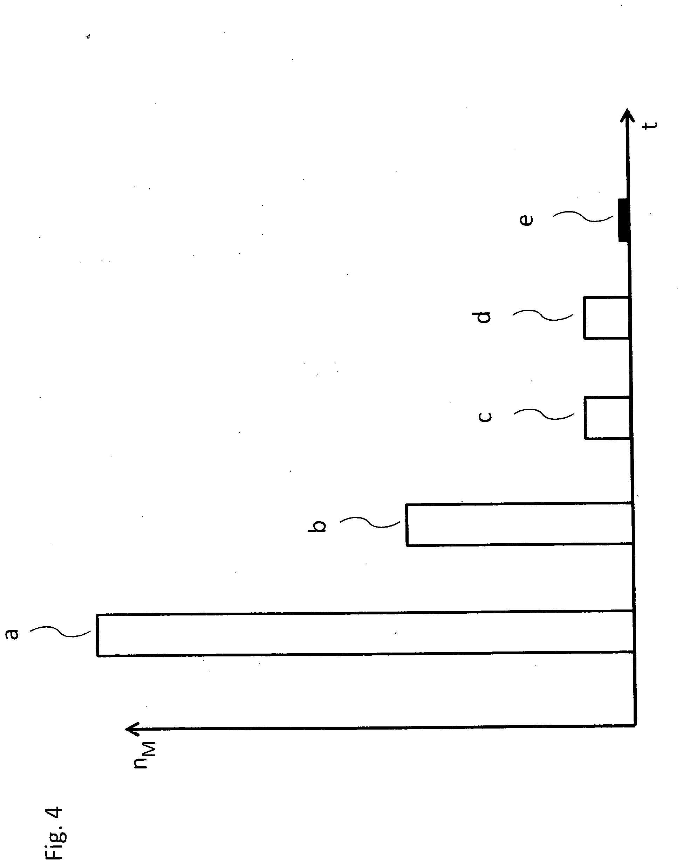

In Figur 4 ist die zeitliche Entwicklung t unter Betrachtung der Anzahl der betrachteten Möglichkeiten $n_m$ gezeigt. Zu Anfang sind alle Kombinationsmöglichkeiten "a" vorhanden. Der Systemmanager wählt danach die Kombinationen aus, die den Wärmebedarf erfüllen "b". Aus den Kombinationen, die den Wärmebedarf erfüllen werden vorteilhaft etwa die günstigsten 20 % ausgewählt "c". Ausgehend von den Günstigsten "c" werden zukünftige Lösungen "d" simuliert, die vom Systemmanager generiert werden. Und eine beste Lösung "e" ist eine günstigste Kombination aus den simulierten Lösungen "d". Die Auswahl der Günstigsten erfolgt insbesondere so, dass eine Teilmenge der Lösungen von "b" für die weitere Berechnung herangezogen wird. Die Auswahl ist in einem Ausführungsbeispiel abhängig von der Rechenkapazität des Systems. Soweit die Rechenkapazität groß genug ist, können auch alle Lösungen "b" simuliert werden. Vorzugsweise werden allerdings ca. 90-30 % der Lösungen verworfen, insbesondere ca. 75% oder 50%.

Eine zentrale Intelligenz des Reglers 1 bildet vorzugsweise der Systemmanager 100, der wenigstens ein Verteilsystem mit Modulen 210-260, unterschiedlichste Verteilsysteme wie Wärmesenken und/oder den wenigstens einen Energiewandler als Kälte -oder Wärmequellen mit seinen Modulen abfragt und/oder regelt. Es wird in regelmäßigen Abständen eine Bilanz aus Angeboten des Energiewandlers und Nachfrage des Verteilsystems erstellt und mittels spezieller Algorithmen eine Wert-, Preis- oder Effizienzoptimierte Betriebsweise ausgewählt.

Dabei besitzt der Systemmanager 100 selbst in vorteilhafter Weise nur wenig eigene Informationen über das physische Gesamtsystem. Alle Prozesswerte wie Temperaturen, Drücke, Volumenströme, Leistungen oder Interprozesswerte liegen als Variable vor, sowie vorzugsweise Tabellen mit Wetterprognosedaten und/oder flexiblen Energiepreistarifen. Sie werden gemäß einem Gedanken der Erfindung im zentralen Speicher 400 abgelegt.

Die Parameter wie beispielsweise Raumluftsoll- und Warmwassersolltemperatur sind zunächst vorzugsweise Benutzereingaben, die zum Beispiel über ein Bedienteil 430 oder Raumregler 440, 450 in den Speicher 400 geschrieben werden, die aber vorzugsweise auch von internen Prozessen temporär überschrieben oder angepasst werden. Das Bedienteil 430 und die Raumregler 440, 450 sind über Anschlüsse 431, 441, 451 mit dem Speicher 400 verbunden.

Vorzugsweise ist eine Anzahl der Kombinationen der verschiedenen Module des Verteilsystems welches Wärme-/Kältesenken aufweisen kann oder mehrere Verteilsysteme sowie den Energiewandler mit einer oder mehreren Quellen-/ Erzeuger-Modulen oder mehreren Energiewandlern in der Konfigurations-Ebene 410 abgelegt. Während der Abarbeitung der Prozesse kann der Systemmanager 100 auf die benötigten Informationen der Konfigurationsebene 410 zurückgreifen, die vorzugsweise einen Speicher zur Datenspeicherung aufweist.

Gemäß einem Ausführungsbeispiel können die Energiewandler vorzugsweise als Wärmequellen unterschiedlich konfiguriert oder für unterschiedliche Anwendungen freigegeben sein. So kann beispielsweise ein in einer Wärmepumpe eingebauter elektrischer Durchlauferhitzer für eine Warmwasserbereitung und einen Heizbetrieb unterschiedlich konfiguriert sein. Durch Änderungen der Parameter durch den Benutzer oder durch äußere Eindrücke (EVU-Sperre) ändert sich die Konfiguration vorzugsweise auch während des Betriebes.

Der Systemmanager 100 selbst kann auch einen eigenen Speicher besitzen, in dem die Konfiguration (Systemzusammenstellung) hinterlegt ist, so dass dem Systemmanager bekannt ist, welche Geräte / Module sich im Verteilsystem und/oder Energiewandler befinden. Die Konfiguration und der momentane Zustand der einzelnen Geräte kann auch in den Modulen 210-260 und 310-360 selbst abgelegt sein und wird erst auf Anfrage des Systemmanagers bekannt gegeben. Da die einzelnen Module 210-260 und 310-360 über ein Bus-System vorteilhaft unmittelbar mit einem Bedienteil oder anderen Systemschnittstellen verbunden sind, kann eine Änderung der Konfiguration oder beispielsweise der Sollwerte durch den Benutzer stattfinden, ohne dass der Manager dies vorteilhaft unmittelbar mitbekommt.

Die Treiber-Ebene 420 kommuniziert bidirektional mit der Konfigurationsebene 420. Hier sind vorzugsweise die Kennlinien der unterschiedlichen Sensoren und Aktoren hinterlegt. Zwischen dem Systemmanager und den Modulen des Energiewandlers und/oder der Module des Verteilsystems, sowie der Konfigurationsebene 420 erfolgt ein Datenaustausch.

Zur Ausführung des Verfahrens besitzt der Systemmanager 100 eine zentrale, steuernde Funktion und kommuniziert mit den mit ihm in Verbindung stehenden Modulen 210-260 und/oder 310-360 nach einer gewissen Routine.

Die Kommunikation des Systemmanagers 100 mit den Modulen 210-260 und 310-360 des Energiewandlers und/oder des Verteilsystems kann auf unterschiedliche Weise angetriggert werden.

**• Zeitgesteuert Antriggerung**

Nach Ablauf einer Zeitspanne, vorzugsweise alle 1 bis 10 Minuten, startet der Systemmanager 100 eine neue Leistungsanfrage an die Module 210-260 und 310-360. Vorteilhaft ist eine fest eingestellte Zeitspanne, die bei stark dynamischen Vorgängen, insbesondere abhängig von den Parametern einer Dynamik, verändert wird. Bei einer starken Dynamik ist die Zeitspanne eher kürzer, vorzugsweise kürzer als 2 Minuten. Sie kann in einem Ausführungsbeispiel abhängig von der Intensität der Dynamik sein. Ein Beispiel hierfür ist eine Solaranlage mit Modul 310, die bei leicht bewölktem Himmel in kurzen Zeitabschnitten voll von der Sonne bestrahlt wird oder durch Wolken abgedeckt ist. Hierbei liegt eine starke Dynamik der Leistungserbringung von Wärme oder Strom vor, wodurch abhängig von der Änderung der Intensität der Einstrahlung die Zeitspanne auch sehr kurz sein kann, insbesondere zwischen einer Sekunde und einer Minute,

**• Ereignisgesteuerte Antriggerung**

Wird ein bestimmter fest eingestellter Pegel eines zuvor definierten Prozesswertes über- oder unterschritten, kommt es vorzugsweise zur Aussendung eines Interrupts und die Abfrage des Systemmanagers 100 startet, bevor die übergeordnete Zeitroutine abgelaufen ist. Dessen Zähler wird hierbei zurückgesetzt.

**• Fremdgesteuerte Antriggerung**

Durch von außen kommende Signale, insbesondere eine EVU-Sperre, Signale aus einem Stromnetz oder eine externe Wärmeanforderung, kann ebenfalls ein Interrupt ausgelöst werden.

Nach einem Antriggern der Kommunikation arbeitet der Systemmanager 100 vorzugsweise nach einem festen Schema, insbesondere der Reihe nach, die folgenden Punkte ab:

1. Bedarfsbestimmung

Die Funktionen der einzelnen Verteilungskreise, insbesondere Heiz- oder Kühlkreise sind in den Modulen 210-260 angesiedelt. Hier erfolgt die Parametrisierung durch den Benutzer über den Raumregler 440 oder ein zentrales Bedienteil 430. Raumsolltemperaturen, Zeitprogramme und Betriebsarten können in unabhängigen Modulen 210-260 oder 310-360 unterschiedlich konfiguriert werden. Folgende Funktionen sind in den Verteilkreismodulen 210-260 integriert:

- Bestimmung der Sollparameter wie Solltemperaturen für Raumluft, Warmwasser, etc., insbesondere zeitgesteuert.

- Bestimmung der Regelabweichung der Sollparameter aus aktuell gemessenen Werten.

- Bestimmung der benötigten Wärme-/Kälteleistung.

- Bestimmung einer benötigten Vorlauftemperatur, die der Energiewandler bereitstellen kann.

2. Senden der Bedarfe

Nach der Bestimmung der insbesondere zeit-, programm- und/oder außentemperaturabhängigen Solltemperatur oder einer Benutzervorgabe eines Festwertes wird in vorteilhafter Weise die daraus resultierende Leistungsanforderung an den Systemmanager 100 gesendet oder ausgetauscht. In der Mitteilung sind vorzugsweise verschiedene Informationen enthalten:

- Absender des Moduls 210-260 mit Name und/oder Kennung.

- Solltemperaturen insbesondere der Vorlauftemperatur.

- Bedarf an Wärme-/Kälteleistung.

- Evtl. Priorität oder Konfiguration, insbesondere falls diese nicht schon zentral abgelegt sind.

Die gesammelten Bedarfe werden im vorteilhaft als Anfrage an die Erzeugermodule 310-360 gesendet, die nun in verschiedene Kategorien unterteilt Angebote an Wärme- oder Kälteleistung abgeben können.

3. Berechnung der Wärme-/Kälteangebote

Die einzelnen Module des Energiewandlers 310-360 berechnen nun bei den geforderten Bedingungen, insbesondere der Solltemperatur des Vorlaufs und der gegebenen Außentemperatur und/oder einer solaren Einstrahlung einer Soletemperatur einer Erdwärmequelle für eine Wärmepumpe, welche Leistung sie zu welchen Konditionen zur

Verfügung stellen können. In der Antwort der Energiewandler sind vorzugsweise die folgenden Informationen enthalten:

- Absender des Moduls 310-360, vorzugsweise mit Name und/oder Kennung.

- Sollwerte, insbesondere Solltemperaturen, insbesondere des Vorlaufs.

- Kategorie, insbesondere eine Preiskategorie, wobei eine Einteilung von 1 bis 10 oder kontinuierliche Einteilung vorteilhaft ist.

- Angebot an Leistung.

- Vorzugsweise eine Priorität oder eine Konfiguration oder ein Wert einer Priorität oder Konfiguration, gegebenenfalls wenn diese nicht zentral abgelegt ist und insbesondere wenn ein Wärmeerzeuger auf Grund der hydraulischen Verschaltung nur bestimmte Senken bedienen kann.

Prinzipiell ist es vorteilhaft, wenn jeder Energiewandler mehrere Angebote für verschiedene Preiskategorien abgeben.

4. Lastvermittlung

Der Systemmanager 100 wählt aus zum Teil sehr vielfältigen Kombinationsmöglichkeiten eine optimale und preislich günstige Kombination der Energiewandler und/oder der Module des Energiewandlers in bestimmten Leistungsstufen aus. Die dahinter stehenden Algorithmen sind im nachfolgenden Abschnitt des Lastvermittlungsverfahrens näher beschrieben. Die Berechnung der Betriebskosten für die getroffene Auswahl erfolgt ebenfalls hier.

5. Ansteuern der beteiligten Module 210-260 und 310-360

In einem letzten Schritt werden die beteiligten Verteilsysteme oder Module 210-260 des wenigstens einen Verteilsystems und Energiewandlers oder der Module des wenigstens einen Energiewandlers vom Systemmanager 100 entsprechend der zuvor getroffenen Auswahl angesteuert.

**Simulationsrechnungen für Zustände, insbesondere zukünftige Zustände**

Insbesondere für Regelungsverfahren, bei denen eine intelligente und voraussehende Anpassung an sich ändernde äußere Bedingungen umgesetzt werden soll, werden Simulationsrechnungen durchgeführt. In diesem Fall schließt sich vorzugsweise an die zuvor beschriebenen Punkte 1. bis 5. eine zusätzliche Simulationsrechnung an:

6. Simulationsrechnungen

Für die Simulationsrechnungen werden zuvor vorzugsweise Tabellen mit in der Zukunft liegenden Daten benötigt, die z.B. über das Internet eingelesen werden. Diese können beispielsweise Wetterprognosedaten in der folgenden Form enthalten:

| Uhrzeit | Lufttemperatur | Luftfeuchtigkeit | Solare Einstrahlung | ... |
|---------|----------------|------------------|---------------------|-----|
| 00:00 | ..°C | ..% | ..W/m$^2$ | ... |
| 01:00 | ..°C | ..% | ..W/m$^2$ | ... |
| ... | ..°C | ..% | ..W/m$^2$ | ... |
| 23:00 | ..°C | ..% | ..W/m$^2$ | ... |

Weitere Daten können bei der Verwendung variabler Strom-/Gastarife in folgender Form eingelesen werden:

| Uhrzeit | Tarif |
|---------|----------|
| 00:00 | ..ct/kWh |
| 01:00 | ..ct/kWh |
| ... | ..ct/kWh |

(fortgesetzt)

| Uhrzeit | Tarif |
|---------|-------|
| 23:00 | ..ct/kWh |

In einem iterativen Verfahren wird nun insbesondere eine Tabelle mit Simulationsergebnissen vorzugsweise in einer Simulationsdatenbank gefüllt, das folgende Schritte umfasst:

- System-Manager wird vorzugsweise auf "Simulation" gesetzt, was bedeutet, dass lediglich eine Berechnung der Werte und zunächst noch keine Hardware-Ansteuerung der Module 210-260 oder 310-360 erfolgte. Von den folgenden Verfahrensschritten wird dabei eine Kombination der Schritte verwendet, vorzugsweise in der Reihenfolge wie sie hier aufgelistet sind, hierbei können einzelne Schritte auch ausgelassen werden, insbesondere wenn die Daten nicht vorliegen:

    ◦ Hochsetzen der "Simulations-Systemzeit" entsprechend dem Simulationszeitschritt.

    ◦ Einlesen der Wetterdaten, insbesondere einer Lufttemperatur und einer Solarstrahlung für die entsprechende Uhrzeit.

    ◦ Berechnen der neuen Wärmebedarfe mit den Wärme-/Kältesenken des Verteilsystems und/oder der Module.

    ◦ Einlesen künftiger Strom-/Gastarife für die entsprechende Uhrzeit.

    ◦ Berechnen neuer Leistungsangebote der Energiewandler oder der Module, insbesondere einer Solaranlage, Fotovoltaikanlage und/oder einer Wärmepumpe, vorzugsweise Luft-Wasser-Wärmepumpe.

    ◦ Auswahl der neuen Ansteuerung der beteiligten Module 210-260 und/oder 310-360, insbesondere eine Lastvermittlung.

    ◦ Berechnen der neuen Betriebskosten.

    ◦ Schreiben der Ergebnisse in eine Simulationsdatenbank.

- Wenn die maximale Simulationsdauer erreicht ist, wird die Simulation vorzugsweise abgebrochen.

- Analyse der Simulationsergebnisse

    ◦ Wenn die Betriebskosten in den folgenden Stunden deutlich, vorteilhaft im Rahmen eines zuvor definierten Toleranzbandes günstiger sind, was insbesondere durch eine zukünftige höhere Außentemperatur, höhere solare Einstrahlung, günstigere Strom-oder /Gastarife bedingt ist, dann erfolgt vorteilhaft eine Beeinflussung der Sollwerte auf einen "Niedertemperatur-Betrieb" - insbesondere wird die Vorlauftemperatur vorteilhaft gesenkt oder angehoben. Insbesondere wird in diesem Fall Energie eingespart und etwas geringere Solltemperaturen in Kauf genommen, da ein günstigeres Aufheizen in unmittelbarer Zukunft folgt. Durch die thermische Trägheit von Häusern bedingt kann hierdurch insbesondere ein Überheizen der Innenräume z.B. durch solare Einstrahlung vermieden werden, wie es bei Regelung über außentemperaturgeführte Heizkurven häufig auftreten kann.

    ◦ Besteht also abhängig von der Prognose die Aussicht, dass in einem Zeitraum bzw. in einem akzeptablem zeitlichen Abstand zur momentanen Situation, also später Wärme- oder Kälteenergie viel günstiger als momentan zur Verfügung steht, dann wird der Sollwert zunächst abgesenkt, um die später günstiger zur Verfügung stehende Wärme- oder Kälteenergie besser zu nutzen. Anders herum wird die Solltemperatur, insbesondere die Vorlauftemperatur zu einem momentanen Zeitpunkt angehoben um die noch günstigere Wärme- oder Kälteleistung zu nutzen, wenn zum Beispiel momentan die Sonne scheint und später mit starker Bewölkung oder tieferen Außentemperaturen zu rechnen ist. In einem anderen Fall wird ein Luftvolumenstrom zur Belüftung eines Gebäudes zu Zeiten mit hohen Außenlufttemperaturen höher eingestellt als bei Zeiten mit niedrigeren Temperaturen - vorzugsweise so gesteuert, dass der Luftwechsel in einem Zeitraum wie einem Tag oder einer Stunde oder einer anderen Dauer im Mittel einem vorgegebenen Sollwert des Volumenstroms entspricht. Ein Lüftungsgerät wird hierbei als Energiewandler oder ein Modul eines Energiewandlers angesehen,

◦ In einem vorteilhaften Beispiel wünscht der Nutzer einen Volumenstrom von 200 m$^3$/h für sein Gebäude, wobei der Systemmanager feststellt, dass ausgehend vom momentanen Zeitpunkt und den prognostizierten Wetterdaten in zwei Stunden die Sonne scheinen soll und die Temperaturen voraussichtlich um 5 °C ansteigen werden. Das Modul des Energiewandlers stellt dann die Lüftung für die nächsten zwei Stunden auf einen Minimalwert, und der Sollvolumenstrom beträgt dann beispielhaft 70 m$^3$/h. Wenn die Außentemperatur angestiegen ist, wird ein höherer Volumenstrom eingestellt. Der Sollvolumenstrom wird dann beispielhaft auf 330 m$^3$/h für die nächsten zwei Stunden gestellt, so dass über ein Zeitintervall von insgesamt 4 h im Mittel ein Volumenstrom von 200 m$^3$/ erreicht ist.

◦ Der Nutzer kann vorteilhaft auch einen Komfortgrad einstellen, von dem abhängig ein Unterschreiten oder Überschreiten des gewünschten Sollwertes zulässig ist. Entsprechend würde das Modul 310-360 des Energiewandlers, welches hier eine Lüftung, ist dann in der Zeit niedriger Außentemperatur mit einem geringeren Sollwert betrieben und bei höherer Außentemperatur mit dem ursprünglich eigestellten Sollwert von im Beispiel 200 m$^3$/h.

◦ An heißen Sommertagen wird dies vorzugsweise in umgekehrter Richtung durchgeführt, so dass auch ein Sommer/Wintermodus vorteilhaft berücksichtigt ist. Bei hohen Außentemperaturen, beispielsweise über 26 °C, wird die Lüftung mit einem niedrigeren Sollwert des Volumenstroms betrieben, damit das Gebäude nicht unnötig aufgewärmt wird. Sinkt die Außentemperatur zum Beispiel in der Nacht, dann wir der Sollvolumenstrom wieder angehoben um das Gebäude zu kühlen. Diese oben beschriebene Vorgehensweise gilt vorzugsweise anstelle des Volumenstroms für die Lüftung auch für die Vorlauftemperatur oder andere Parameter des Verteilsystems, sowie für andere Module.

◦ Wenn die Betriebskosten in den folgenden Stunden deutlich, insbesondere im Rahmen eines zuvor definierten Toleranzbandes höher sind, was insbesondere durch eine niedrigere Außentemperatur, geringe/keine solare Einstrahlung, hohe Strom-/Gastarife) bedingt ist, dann erfolgt eine Beeinflussung der Sollwerte auf "Hochtemperatur-Betrieb". In diesem Fall wird das Haus als Speicher genutzt und insbesondere die Puffer-/Warmwasserspeicher über die üblichen Sollwerte hinaus mit anderen, insbesondere höheren Sollwerten betrieben und sozusagen aufgeladen, um in den künftigen Stunden mit höheren Betriebskosten weniger heizen zu müssen.

◦ Es wird vorteilhaft eine kurzzeitige Erhöhung der Sollwerte eingestellt. Insbesondere eine Anti-Legionellen Behandlung von Trinkwasser kann in Zeiten mit verhältnismäßig günstigen Tarifen durchgeführt werden, hierbei werden in der Regel Temperaturen von 60 °C gefordert.

◦ Es ist je nach Definition der Toleranzbänder eine mehrstufige oder auch kontinuierliche Anpassung denkbar.

- Überschreiben der Sollwerte in den Verteilsystemen beziehungsweise den Modulen.

- Zurücksetzen des Systemmanagers auf "normale Regelung".

Im Falle, dass eine Fotovoltaikanlage, Windenergieanlage oder andere Anlage zur Erzeugung von Strom mit erneuerbaren Energien vorhanden ist, und der Benutzer von einer besonderen Vergütung durch den Eigenverbrauch des durch den mit erneuerbaren Energien erzeugten Stroms profitieren möchte, gelten vorzugsweise die folgenden Regeln:

Ist aus den Simulationsrechnungen erkenntlich, dass in den kommenden Stunden, insbesondere 1-5 h in der Zukunft, mit ertragreicher solarer Stromerzeugung zu rechnen ist, so wird im Vorfeld eine Einstellung "Niedertemperatur" gewählt und ein Wert, insbesondere die Solltemperatur für Raumluft, Heizungswasser und oder Brauchwasser oder ein Volumenstrom einer Lüftungsanlage entsprechend abgesenkt. Wenn der Solarstrom insbesondere oberhalb eines definierten Grenzwertes vorhanden ist, so wird der Wert "Hochtemperatur-Betrieb" ausgewählt und die Solltemperaturen entsprechend angehoben um möglichst viel von dem z. B. durch die Fotovoltaikanlage erzeugten Strom zu verbrauchen und damit insbesondere die Speicher einer Warmwasser Anlage oder einer Heizungsanlage aufzuladen. Insbesondere ist es von Vorteil eine Anti-Legionellen Behandlung von Trinkwasser in einem Zeitraum durchzuführen, in dem die Stromerzeugung durch die Fotovoltaik Anlage oberhalb eines Grenzwertes liegt. Dabei wird Brauchwasser vorzugsweise auf über 60 °C erhitzt. Vorteilhaft ist es den Strom der Fotovoltaikanlage direkt in einer Elektrowärmepumpe einzuspeisen und dort mithilfe von weiterer Umweltenergie die Energiewandlung in Wärme durchzuführen. Vorzugsweise wird der Grenzwert, an dem eine ertragreiche Stromerzeugung vorliegt abhängig von der Leistungsaufnahme der Wärmepumpe und oder der Leistungsfähigkeit der Fotovoltaikanlage bestimmt.

## Lastvermittlungsverfahren

Das Kernstück des Systemmanagers 100 ist die passgenaue Bedarfserfüllung unter der Randbedingung der niedrigsten Systemkosten. Im Wesentlichen ist dies ein Optimierungsvorgang, bei dem die Randbedingung durch die Minimierung der zu erwartenden Systemkosten gegeben ist. Die Beachtung des Kostenaspekts ist insbesondere in der Heizungssystemtechnik ein Novum und wird grade im Hinblick auf den Ausbau des intelligenten Stromnetzes eine große Bedeutung erlangen,

Dazu wird von jedem Energiewandler, also Geräte die von Wärme- oder Kälteenergie im System, insbesondere einer Wärmepumpe, einem Durchlauferhitzer, einer Solaranlage, einer Fotovoltaikanlage, einem mit Öl, Gas oder Holz betriebenen Wärmeerzeuger, Wärme oder auch Kälte mit den entsprechenden Kosten angeboten. Im Allgemeinen können die Parameter oder die Kosten durch beliebige Einheiten oder Größen beschrieben werden. So kann in Euro und Cent, in COP-Punkten, in elektrischer Energie, insbesondere als hochwertigste Form der Energie oder auch in Primärenergieeinheiten gerechnet werden. Die Einsparungen der Energiewandler gegeneinander werden in vorteilhafter Weise angezeigt, die Module des Energiewandlers stehen im Wettbewerb, und es wird angezeigt, ob der Betrieb einer Wärmepumpe oder eines Holzkessels günstiger ist. An dieser Stelle sind viele Formen und mathematische Optimierungsmethoden denkbar.

Die genaue Zusammensetzung der allgemeinen Kosten ist hier der Schlüssel für das korrekte Energiemanagement. An dieser Stelle ergibt sich eine deutliche Aufschlüsselung der unterschiedlichen Erzeuger. Trotzdem folgt die Findung der Parameter, insbesondere Basiskosten in vorteilhafter Weise dem folgenden Leitfaden:
In die Parameter, insbesondere ein Wert, der insbesondere die Kosten abbildet, fließt als Kriterium zuerst der Energieverbrauch insbesondere Strom, Öl, Gas, Umweltwärme ein und dann die entsprechenden Energiekosten (z.B. Strompreis für WP, Ölpreis, Gaspreis, Strompreis z.B. Solarpumpe, ...). Insbesondere werden laufzeitabhängige Werte, insbesondere die Kosten für eine Wartung und eine Reparatur in den Wert mit eingerechnet. Dies kann beliebig komplex gestaltet werden, und so sind etwa intensitätsabhängige Verschleißteilkosten, An- und Ausschaltvorgänge oder Schornsteinfegerkosten mit integriert. Zusätzlich können beliebige weitere Posten aufgenommen werden, so könnte beispielsweise der $CO_2$-Fußabdruck für Umweltbewusste ein Parameterkriterium bzw. ein Kostenfaktor sein. In Summe ergibt sich für den Wert $K_{ges}$ eines Wärmeerzeugers mit $n$ Kostenpositionen im allgemeinsten Fall:

$$K_{ges} = \sum_{i=1}^{n} \zeta_i K_i$$

Dabei sind $K_i$ die einzelnen Parameter oder Einzelkriterien und $\zeta_i$ die Gewichtungskoeffizienten der einzelnen Kriterien. Durch diese kann die genaue Abwägung vorgenommen werden. Wenn also jemandem der $CO_2$-Fußabdruck am wichtigsten ist, wird der entsprechende Gewichtungskoeffizient im Vergleich zu den Anderen groß gewählt.

Dementsprechend hat der Systemmanager 100 nach dieser Prozedur eine Liste mit bepreisten Wärmeangeboten der einzelnen Module 310-360 des Energiewandlers. Demgegenüber steht ein globaler Wärmebedarf Q oder $\dot{Q}_{ges}$ des Verteilsystems 210-260, den es zu erfüllen gilt. Im einfachsten Fall, nur eines modulierenden Energiewandlers, z.B. eines Ölkessels, ist diese Aufgabe trivial, da es nur eine Möglichkeit gibt. Jedoch schon für Standardanlagen, bestehend aus einer Wärmepumpe mit einem Verdichter, der mit unterschiedlichen Drehzahlen betrieben wird gibt es schon viele verschiedene Möglichkeiten, die Wärme $\dot{Q}_{ges}$ bereitzustellen. Die Anzahl der Möglichkeiten wird größer, je mehr Wärmeerzeuger im Energiewandler vorhanden sind, wenn die Wärmepumpe z. B. mit einer elektrischen Nachheizung und einem Solarthermiekollektor gekoppelt ist wie es zu Fig. 2 erläutert ist.

Anhand eines Ausführungsbeispiels lassen sich zwei Möglichkeiten kurz beschreiben. Es wird Heizungswärme benötigt, und das EVU bietet aufgrund von Überkapazität im Netz einen Wärmepumpenstrom (WP-Strom) für einen Energiewandler mit einer Wärmepumpe (WP) sehr günstig an. Gleichzeitig scheint aber die Sonne kostenlos auf die Kollektoren; diese können den Wärmebedarf $\dot{Q}_{ges}$ allerdings nicht allein decken. Eine Solarkollektorpumpe, die ein Wärmeträgermedium durch die Kollektoren pumpt, wird dabei mit einem Normalstromtarif betrieben, der teurer ist als der Wärmepumpenstrom:

Szenario 1: WP-Teilastbereich plus Solarwärme

Szenario 2: WP-Volllast ohne Solarwärme

Da nun der Normalstromtarif teurer ist als der WP-Strom und die WP im Volllastbereich effektiver ist als im Teillastbereich, ist das Szenario 2 günstiger, obwohl die Sonne kostenlos scheint!

Im Folgenden wird nun das allgemeine Verfahren der Findung der bestmöglichen Lösung beschrieben. Vorzugsweise in einem ersten Schritt werden Möglichkeiten gesucht, die den vorgegebenen Bedarf $\dot{Q}_{ges}$ aus $k$ einzelnen

Wärmeangeboten $\dot{Q}_h$ erfüllen können. Die zu erfüllende Randbedingung ist also:

$$\dot{Q}_{ges} = \sum_{h=1}^{k} \dot{Q}_h$$

Im Allgemeinen kann diese Bedingung durch eine große Menge an Möglichkeiten erfüllt werden. In einem einfachsten Fall geschieht die Findung der Möglichkeiten, die die Randbedingung erfüllen, mit Hilfe purer Rechenpower, etwa durch den Vergleich aller Möglichkeiten. Für große Energiewandler, z.B. Kaskadenanlagen mit mehreren regelbaren Wärme- oder Kälteerzeugern können nach geeigneter Aufbereitung auch genetische Algorithmen, Schwarmintelligenz oder mehrdimensionale, nichtlineare Optimierungsverfahren genutzt werden, um den entsprechend großen Suchraum abzusuchen.

Die Kombinationen, die die Bedarfe erfüllen können, bilden die Kombinationsmenge $M$. Für jede Kombination $m \in M$ wird ein Wert $K_{m,ges}$, insbesondere ein Wert für die Kosten, berechnet:

$$K_{m,ges} = \sum_{h=1}^{k} \sum_{i=1}^{n} \zeta_i K_{m,h,i}$$

*für alle $m \in M$*

Im Anschluss wird nun der Wert bzw. die Kosten der individuellen Lösungen bewertet und die günstigste ausgewählt. Da dieses Minimierungsproblem sehr viel kleiner ist als die Bedarfserfüllung, wird hier ein einfacher Vergleich eingesetzt, um die günstigste Kombination $K_{best}$ zu finden.

$$K_{best} = \min K_{m,ges}$$

*mit $m \in M$*

Allerdings sollen hier explizit auch hier die leistungsfähigere mathematischen Verfahren, wie oben beschrieben, erwähnt werden, die hier auch zum Einsatz kommen könnten.

Zusätzlich können an dieser Stelle durch einen Server bereitgestellte Wettervorhersagedaten vorteilhaft integriert werden. Dies ist sehr sinnvoll, denn ein wesentlicher Teil der Kosten sind in jedem Fall An- und Aus-Schaltvorgänge. Diese können aber durch eine geeignete Auswahl unter Berücksichtigung der zukünftigen Wetterentwicklung ebenfalls minimiert werden. Um dies zu erreichen, werden für eine bestimmte Anzahl, insbesondere eine Menge $P$, an möglichen kostengünstigen Lösungen, in vorteilhafter Weise die günstigsten 20%, die Entwicklung der Kosten für die vorhergesagten Wetterdaten simuliert. Hier können ebenfalls auch Gebäudedaten, insbesondere mit einer thermischen Dämpfung, einbezogen werden. Die zukünftigen Bedarfe $\dot{Q}(t)$ werden allerdings nicht nur durch die Außentemperatur, sondern auch durch den Bewohner/ Benutzer vorgegeben. Dieses Verhalten kann im einfachsten Fall als konstant approximiert werden, was bedeutet, dass keine Änderungen an der Steuerung / an dem Programmbetrieb mit Absenkverhalten erforderlich ist und dies vorteilhaft als bekannt und konstant angesehen wird.

Es wird vorteilhaft durch eine Analyse des vergangenen Nutzerverhaltens eine zeitaufgelöste Bedarfsermittlung, z.B. des Warmwasserverbrauchs, durchgeführt.

Außerdem ist es vorteilhaft, wie oben beschrieben auch die Bedarfe für eine gezielte Wärmespeicherung oder Wärmeentzug verändert werden, um zukünftige Entwicklungen besser auszunutzen. Damit lässt sich der zeitaufgelöste Gesamtwärmebedarf als neue zeitaufgelöste Randbedingung schreiben als:

$$\dot{Q}_{ges}(t) = \sum_{l=1}^{k} \dot{Q}_l(t)$$

Damit können die zukünftigen Bedarfe bessere abgeschätzt und so die Genauigkeit der Simulation verbessert werden. Für die Kosten ergibt sich somit eine Wertentwicklungskurve $K_{p,ges}(t)$ für alle betrachteten Lösungen $p \in P$ für die Zukunft.

$$K_{p,ges}(t) = \sum_{h=1}^{k} \sum_{i=1}^{n} \zeta_i K_{p,h,i}(t)$$

*für alle p ∈ P*

Kumuliert man diese, erhält man eine neue Zielgröße $L_p$ (Lösung) für alle $p \in P$,

$$L_p = \int K_{p,ges}(t)dt$$

*für alle p ∈ P*

Die neuen Zielgrößen $L_p$ werden während des Betriebs des Energiewandlers mit den aus der Simulation stammenden Daten untereinander und/oder mit einer Vergleichszielgröße $L_V = \int \min K_{p,ges}(t)dt$ verglichen. Diese Größe $L_V$ ist die Kumulation des Kostenwertes der günstigsten Kombination zu jedem Zeitschritt im Simulatiortszeitraum. Die im Vergleich als Optimum gefundene Zielgröße $L_{best} = \min(L_p, L_V)$ für alle $p \in P$ wird als Arbeitspunkt am Energiewandler eingestellt. Damit wird die voraussichtlich über den gesamten Simulationszeitraum günstigste Betriebsweise durchgeführt. Die Entwicklung der Anzahl der Möglichkeiten im Verlauf des gesamten Prozesses wird in Fig. 3 dargestellt. Die Module 210-260 und 310-360 stellen vorzugsweise eine Elektronikeinheit dar, die insbesondere jeweils einem Kälte- oder Wärmeerzeuger, einem Lüftungsgerät oder einem anderen Haustechnikgerät, insbesondere zu Heizung, Kühlung oder Lüftung zugeordnet ist. Abweichend vom Ausführungsbeispiel umfasst die Erfindung auch Lösungen, bei denen sich der Systemmanager 100 in einem oder mehreren der Module 260-260 oder 310-360 oder aber auch die Module 260-260 oder 310-360 zum Teil oder ganz im Systemmanager enthalten sind. Auch die anderen Komponenten des Reglers 1, wie zum Beispiel die Speicher 400, die Konfigurationsebene 410 oder die Treiber-Ebene 420, können sich im Systemmanager befinden oder der Systemmanager in einer der Komponenten. Insbesondere ist es von Vorteil, wenn sich im Systemmanager 100 der Speicher 400, die Konfigurationsebene 410 oder die Treiber-Ebene 420 befinden.

In einem vorteilhaften Ausführungsbeispiel erfolgt eine Abfrage des Kälte- oder Wärmeleistungsangebots wenigstens eines Energiewandlers, welcher wenigstens ein erstes Wärmepumpenmodul 320 und ein zweites Wärmepumpenmodul 330 aufweist. Die Wärmepumpenmodule 320, 330 weisen jeweils eine leistungsgeregelte Wärmepumpe, insbesondere invertergeregelte Wärmepumpe auf, mit wenigstens einem Verdichter, welcher mit variablen Drehzahlen betrieben werden kann. Von jedem Wärmepumpenmodul 320, 330 wird das Wärme- oder Kälteleistungsangebote bei unterschiedlichen Drehzahlen der Verdichter, insbesondere vom Systemmanager 100 ermittelt, wobei die günstigste Kombination der Wärme- oder Kälteleistungsangebote für die Deckung des Gesamtwärmebedarfs $\dot{Q}_{ges}$ ausgewählt wird und die Verdichter mit den zu den ausgewählten Wärme- oder Kälteleistungsangeboten zugehörigen Drehzahlen betrieben werden.

**Patentansprüche**

1. Verfahren zum Regeln zumindest zweier Energiewandler zur Bereitstellung von Wärme- oder Kälteleistung für ein Verteilsystem mit mindestens einer Wärme- oder Kältesenken,
   wobei ein Wärme- oder Kälteleistungsbedarf $\dot{Q}$ wenigstens eines Verteilsystems ermittelt wird,
   wobei wenigstens ein erster Energiewandler elektrischen Strom zur Erzeugung von Wärme- oder Kälteleistungsangeboten zur Deckung des Wärme- oder Kälteleistungsbedarf des Verteilsystems verwendet,
   wobei wenigstens zwei Wärme- oder Kälteleistungsangebote $\dot{Q}_h$ der wenigstens zwei Energiewandler ermittelt werden,
   wobei aus den wenigstens zwei Wärme- oder Kälteleistungsangeboten $\dot{Q}_h$ zweier Energiewandler für den Wärme- oder Kälteleistungsbedarf $\dot{Q}$ des Verteilsystems eine möglichst günstige Kombination $K_{best}$ ausgewählt wird,
   wobei für den wenigstens einen ersten Energiewandler jedem Wärme- oder Kälteleistungsangebot eine elektrische Leistungsaufnahme des ersten Energiewandlers und einer der elektrischen Leistungsaufnahmen zugeordnete Preisstufe zugeordnet ist,
   und die Energiewandler abhängig von den ausgewählten Angeboten $\dot{Q}_h$ einen Sollwert des Energiewandlers entsprechend der Kombination $K_{best}$ einstellen, wobei die Kombination $K_{best}$ basierend auf den aktuellen Strompreisen für das jeweilige Wärme- oder Kälteleistungsangebot ausgewählt wird,
   wobei jedem der wenigstens zwei Wärme- und Kälteleistungsangebote ein wählbarer Gewichtskoeffizient zugeordnet ist,
   wobei der wenigstens eine erste Energiewandler eine drehzahlgeregelte Luft-Wasser-Wärmepumpen darstellt, wobei die Leistungszahl der Luft-Wasser-Wärmepumpe abhängig von Vorlauftemperatur der Luft-Wasser-Wärmepumpe, einer Außentemperatur und einer Verdichterdrehzahl eines Verdichters der Luft-Wasser-Wärmepumpe ist,
   wobei bei einer gegebenen Vorlauftemperatur und bei unterschiedlichen Verdichterdrehzahlen verschiedene Wärme- oder Kälteleistungsangebote mit unterschiedlichen Leistungen und unterschiedlichen Leistungszahlen abgebbar sind.

**2.** Verfahren nach Anspruch 1,
enthaltend den Verfahrensschritt,
dass in einem Schritt die Kombinationen einer Menge $M$ gesucht werden, die den vorgegebenen Bedarf $\dot{Q}_{ges}$ aus $k$ einzelnen Wärmeangeboten $\dot{Q}_h$ erfüllen, wobei $k$ die Anzahl von Modulen oder Energiewandlern ist,

$$\dot{Q}_{ges} = \sum_{h=1}^{k} \dot{Q}_h$$

wobei die Randbedingung erfüllt sein muss und die Summe der Wärme- oder Kälteleistungsangebote $\dot{Q}_h$ aus $k$ Modulen oder Energiewandlern den Bedarf $\dot{Q}_{ges}$ erfüllt.

**3.** Verfahren nach Anspruch 1 oder 2,
enthaltend den Verfahrensschritt,
dass für jede Möglichkeit m der Menge der Möglichkeiten $M$, insbesondere gemäß $m \in M$, nur ein Wärmeangebot $\dot{Q}_h$ jedes Energiewandlers oder jedes Modul des Energiewandlers zur Erfüllung des Bedarfs $\dot{Q}_{ges}$ herangezogen wird.

**4.** Verfahren nach einem der vorhergehenden Ansprüche,
enthaltend den Verfahrensschritt,

dass Für jede Kombination $m \in M$ ein Wert $K_{m,ges}$ gemäß $\quad K_{m,ges} = \sum_{h=1}^{k} \sum_{i=1}^{n} \zeta_i K_{m,h,i} \quad$ berechnet wird.

**5.** Verfahren nach einem der vorhergehenden Ansprüche,
enthaltend den Verfahrensschritt,
dass ein Vergleich der Werte $K_{m,ges}$ erfolgt und eine günstigste Kombination $K_{best}$ ausgewählt wird.

**6.** Verfahren nach einem der vorhergehenden Ansprüche,
enthaltend den Verfahrensschritt,
dass die beste günstige Kombination gemäß der Bedingung $K_{best}$ = min $K_{m,ges}$ mit $m \in M$ ausgewählt wird.

**7.** Verfahren nach einem der vorhergehenden Ansprüche,
enthaltend den Verfahrensschritt,
dass ein zukünftiger Verlauf des Werts simuliert wird und eine Wertentwicklungskurve $K_{p,ges}(t)$ für alle betrachteten

$$K_{p,ges}(t) = \sum_{h=1}^{k} \sum_{i=1}^{n} \zeta_i K_{p,h,i}(t)$$

Lösungen $p \in P$ für die Zukunft entsprechend für alle $p \in P$ berechnet wird, wobei insbesondere Wetterdaten und Energietarife berücksichtigt werden.

**8.** Verfahren nach einem der vorhergehenden Ansprüche,
enthaltend den Verfahrensschritt,
dass die Weiterentwicklungskurve kumuliert, insbesondere aufintegriert wird und eine neue Zielgröße $L_p$ für alle $p \in P$ gemäß
$L_p = \int K_{p,ges}(t)dt$ für alle $p \in P$ ermittelt wird.

**9.** Verfahren nach Anspruch 8,
enthaltend den Verfahrensschritt,
dass die neuen Zielgrößen $L_p$ während des Betriebs des Energiewandlers mit den aus der Simulation stammenden Daten untereinander und/oder mit einer Vergleichszielgröße $L_V = \int$min $K_{p,ges}(t)dt$ verglichen werden und die im Vergleich als Optimum gefundene Zielgröße $L_{best}$ = min $(L_p, L_V)$ für alle $p \in P$ als Arbeitspunkt am Energiewandler eingestellt wird, womit die voraussichtlich über den gesamten Simulationszeitraum günstigste Betriebsweise durchgeführt wird.

**10.** Verfahren nach einem der vorhergehenden Ansprüche, enthaltend die Abfrage des Kälte- oder Wärmeleistungsangebots wenigstens eines Energiewandlers, welcher wenigstens ein erstes Wärmepumpenmodul (320) und ein zweites Wärmepumpenmodul (330) aufweist,
wobei die Wärmepumpenmodule (320, 330) jeweils eine leistungsgeregelte Wärmepumpe, insbesondere invertergeregelte Wärmepumpe, jeweils mit wenigstens einem Verdichter aufweist, welcher mit variablen Drehzahlen betrieben werden kann,

wobei von jedem Wärmepumpenmodul (320, 330) Wärme- oder Kälteleistungsangebote bei unterschiedlichen Drehzahlen der Verdichter insbesondere vom Systemmanager (100) ermittelt werden,

wobei die günstigste Kombination der Wärme- oder Kälteleistungsangebote für die Deckung des Gesamtwärmebedarfs $\dot{Q}_{ges}$ ausgewählt wird und

die Verdichter mit den zu den ausgewählten Wärme- oder Kälteleistungsangeboten zugehörigen Drehzahlen betrieben werden.

**Claims**

1. A method for controlling at least two energy converters for providing heat or cooling capacity to a distribution system comprising at least one heat or cold sink,

wherein a heat or cooling capacity demand $\dot{Q}$ of at least one distribution system is determined,

wherein at least a first energy converter uses electric power to generate available heat or cooling capacities to meet the heat or cooling capacity demand of the distribution system, wherein at least two available heat or cooling capacities $\dot{Q}_h$ of the at least two energy converters are determined,

wherein a most favourable combination $K_{best}$ for the heat or cooling capacity demand $\dot{Q}$ of the distribution system is selected from the at least two available heat or cooling capacities $\dot{Q}_h$ of two energy converters,

wherein, for the at least one first energy converter, an electric power consumption of the first energy converter and a price level assigned to the electric power consumption are assigned to each available heat or cooling capacity, and the energy converters adjust a set value of the energy converter according to the combination $K_{best}$, depending on the selected available capacities $\dot{Q}_h$,

wherein the combination $K_{best}$ is selected for the respective available heat or cooling capacity based on current electricity prices,

wherein a selectable weight coefficient is assigned to each of the at least two available heat and cooling capacities, wherein the at least one first energy converter represents a variable speed air/water heat pump, wherein the performance factor of the air/water heat pump is dependent on the flow temperature of the air/water heat pump, an outside temperature, and a compressor speed of a compressor of the air/water heat pump,

wherein, at a given flow temperature and at varying compressor speeds, varying available heat or cooling capacities with varying outputs and varying performance factors can be released.

2. The method according to claim 1, including the method step of, in one step, searching for the combinations of a set $M$ that meet the specified demand $\dot{Q}_{ges}$ from $k$ individual available heat capacities $\dot{Q}_h$,

wherein $k$ is the number of modules or energy converters,

wherein the boundary condition $\dot{Q}_{ges} = \sum_{h=1}^{k} \dot{Q}_h$ must be met and the sum of available heat or cooling capacities $\dot{Q}_h$ from $k$ modules or energy converters meets the demand $\dot{Q}_{ges}$.

3. The method according to claim 1 or 2, including the method step of, for each possibility $m$ of the set of possibilities $M$, in particular according to $m \in M$, using only one available heat capacity $\dot{Q}_h$ of each energy converter, or each module of the energy converter, to meet the demand $\dot{Q}_{ges}$.

4. The method according to one of the previous claims, including the method step of, for each combination $m \in M$,

$$K_{m,ges} = \sum_{h=1}^{k} \sum_{i=1}^{n} \zeta_i K_{m,h,i}$$

calculating a value $K_{m,ges}$ according to .

5. The method according to one of the previous claims, including the method step of performing a comparison of the values $K_{m,ges}$ and selecting a most favourable combination $K_{best}$.

6. The method according to one of the previous claims, including the method step of selecting the best favourable combination according to the condition $K_{best} = K_{m,ges}$, where $m \in M$.

7. The method according to one of the previous claims, including the method step of simulating a future development of the value and calculating a value development curve $k_{p,ges}(t)$ for all contemplated solutions $p \in P$ for the future according to $k_{p,ges}(t) = \sum_{h=1}^{k} \sum_{i=1}^{k} \zeta_i K_{p,h,i}(t)$ for all $p \in P$, wherein in particular weather data and energy tariffs are taken into account.

8. The method according to one of the previous claims, including the method step of cumulating, in particular integrating, the development curve and determining a new target variable $L_P$ for all $p \in P$ according to $L_p = \int K_{p,ges}(t)dt$ for all $p \in P$.

9. The method according to claim 8, including the method step of comparing the new target variables $Lp$ with each other and/or with a reference target variable $L_V = \int \min K_{p,ges}(t)dt$ during operation of the energy converter with the data resulting from the simulation and setting the target variable $L_{best} = \min (L_p, L_V)$ found as the optimum in the comparison for all $p \in P$ as the operating point on the energy converter, whereby the mode of operation expected to be the most favourable throughout the entire simulation period is performed.

10. The method according to one of the previous claims, including retrieving the available cooling or heat capacity of at least one energy converter comprising at least a first heat pump module (320) and a second heat pump module (330), wherein the heat pump modules (320, 330) each comprise a heat pump with output-dependent control, in particular an inverter-controlled heat pump, each having at least one compressor which can be operated at variable speeds, wherein available heat or cooling capacities at varying speeds of the compressors are determined by each heat pump module (320, 330), in particular by the system manager (100), wherein the most favourable combination of available heat or cooling capacities to meet the total heat demand $\dot{Q}_{ges}$ is selected, and the compressors are operated at the speeds associated with the selected available heat or cooling capacities.

## Revendications

1. Procédé de régulation d'au moins deux convertisseurs d'énergie destinés à mettre à disposition une puissance calorifique ou frigorifique pour un système de distribution doté d'au moins un dissipateur de chaleur ou de froid, dans lequel il est déterminé un besoin en puissance calorifique ou frigorifique $\dot{Q}$ d'au moins un système de distribution, dans lequel au moins un premier convertisseur d'énergie utilise du courant électrique pour créer des offres de puissance calorifique ou frigorifique afin de couvrir le besoin en puissance calorifique ou frigorifique du système de distribution, dans lequel il est déterminé au moins deux offres $\dot{Q}_h$ de puissance calorifique ou frigorifique des au moins deux convertisseurs d'énergie, dans lequel il est choisi une combinaison $K_{best}$ aussi favorable que possible à partir des au moins deux offres de puissance calorifique ou frigorifique $\dot{Q}_h$ de deux convertisseurs d'énergie pour le besoin en puissance calorifique ou frigorifique $\dot{Q}$ du système de distribution, dans lequel, pour l'au moins un premier convertisseur d'énergie, il est attribué à chaque offre de puissance calorifique ou frigorifique une puissance électrique absorbée du premier convertisseur d'énergie et une catégorie de prix correspondant aux puissances électriques absorbées, et les convertisseurs d'énergie établissent, en fonction des offres $\dot{Q}_h$ choisies, une valeur de consigne du convertisseur d'énergie correspondant à la combinaison $K_{best}$, dans lequel le choix de la combinaison $K_{best}$ repose sur les prix actuels de l'électricité pour l'offre de puissance calorifique ou frigorifique considérée, dans lequel il est attribué à chacune des au moins deux offres de puissance calorifique ou frigorifique un coefficient de pondération pouvant être choisi, dans lequel l'au moins un premier convertisseur d'énergie est une pompe à chaleur air-eau à régime régulé, le coefficient de performance de ladite pompe à chaleur air-eau dépendant de la température de départ de la pompe à chaleur air-eau, de la température extérieure et du régime d'un compresseur de la pompe à chaleur air-eau, dans lequel, pour une température de départ donnée et pour des régimes de compresseur différents, il est possible de produire des offres de puissance calorifique ou frigorifique différentes avec différentes puissances et différents coefficients de performance.

2. Procédé selon la revendication 1, comprenant l'étape consistant à rechercher, en une opération, les combinaisons d'un ensemble $M$ telles que le besoin prédéfini $\dot{Q}_{ges}$ est satisfait par $k$ offres de chaleur $\dot{Q}_h$ individuelles, $k$ étant le nombre de modules ou de convertisseurs d'énergie,

la condition aux limites $\dot{Q}_{ges} = \sum_{h=1}^{k} \dot{Q}_h$ devant être satisfaite et le besoin $\dot{Q}_{ges}$ étant satisfait par la somme des offres de puissance calorifique ou frigorifique $\dot{Q}_h$ de $k$ modules ou convertisseurs d'énergie.

3. Procédé selon la revendication 1 ou 2, comprenant l'étape consistant, pour chaque possibilité $m$ de l'ensemble des possibilités $M$, avec notamment $m \in M$, à utiliser une seule offre de chaleur $\dot{Q}_h$ de chaque convertisseur d'énergie ou de chaque module du convertisseur d'énergie pour satisfaire le besoin $\dot{Q}_{ges}$.

4. Procédé selon l'une des revendications précédentes, comprenant l'étape consistant, pour chaque combinaison m

$$K_{m,ges} = \sum_{h=1}^{k} \sum_{i=1}^{n} \zeta_i K_{m,h,i}$$

$\in M$, à calculer une valeur $K_{m,ges}$ telle que .

5. Procédé selon l'une des revendications précédentes, comprenant l'étape consistant à comparer les valeurs $K_{m,ges}$ et à choisir la combinaison $K_{best}$ la plus favorable.

6. Procédé selon l'une des revendications précédentes, comprenant l'étape consistant à choisir la combinaison la plus favorable selon la condition $K_{best} = K_{m,ges}$ avec $m \in M$.

7. Procédé selon l'une des revendications précédentes, comprenant l'étape consistant à simuler un comportement futur de la valeur et à calculer une courbe d'évolution dans le temps de la valeur $k_{p,ges}(t)$ pour toutes les solutions considérées $p \in P$, avec $k_{p,ges}(t) = \sum_{h=1}^{k} \sum_{i=1}^{k} \zeta_i K_{p,h,i}(t)$ pour tous les $p \in P$, les données météorologiques et les tarifs de l'énergie étant notamment pris en compte.

8. Procédé selon l'une des revendications précédentes, comprenant l'étape consistant à cumuler la courbe d'évolution, notamment à l'intégrer et à obtenir une nouvelle grandeur cible $L_P$ pour tous les $p \in P$, avec $L_p = \int K_{p.ges}(t)dt$ pour tous les $p \in P$.

9. Procédé selon la revendication 8, comprenant l'étape consistant à comparer, pendant le fonctionnement du convertisseur d'énergie, les nouvelles grandeurs cibles $L_P$ aux données issues de la simulation et/ou à une grandeur cible comparative $L_V = \int \min K_{p,ges}(t)dt$, et à régler le convertisseur d'énergie sur la grandeur cible optimale $L_{best} = \min(L_P, L_V)$ pour tous les $p \in P$ trouvée par comparaison, pour laquelle le fonctionnement prévu est le plus favorable sur l'ensemble de la période de simulation.

10. Procédé selon l'une des revendications précédentes, comprenant la requête de l'offre de puissance calorifique ou frigorifique d'au moins un convertisseur d'énergie, lequel présente au moins un premier module de pompe à chaleur (320) et un deuxième module de pompe à chaleur (330),
dans lequel les modules de pompe à chaleur (320, 330) présentent chacun une pompe à chaleur à régulation de puissance, notamment une pompe à chaleur à inverter, chacune dotée d'au moins un compresseur pouvant fonctionner à régime variable,
dans lequel il est obtenu, notamment par le gestionnaire de système (100), en provenance de chaque module de pompe à chaleur (320, 330), des offres de puissance calorifique ou frigorifique à différents régimes de compresseur, dans lequel il est choisi la combinaison la plus favorable des offres de puissance calorifique ou frigorifique pour couvrir le besoin global de chaleur $\dot{Q}_{ges}$ et les compresseurs fonctionnent aux régimes qui correspondent aux offres de puissance calorifique ou frigorifique choisies.

Fig. 1

EP 2 615 385 B1

Fig. 2

$\dot{Q}_{ges}$

$\dot{Q}_{W1}$

$\dot{Q}_S$

$\dot{Q}_{EI}$

$\dot{Q}_{W2}$

$\dot{Q}_G$

$\dot{Q}_{W3}$

EP 2 615 385 B1

Fig. 3

EP 2 615 385 B1

Fig. 4

EP 2 615 385 B1

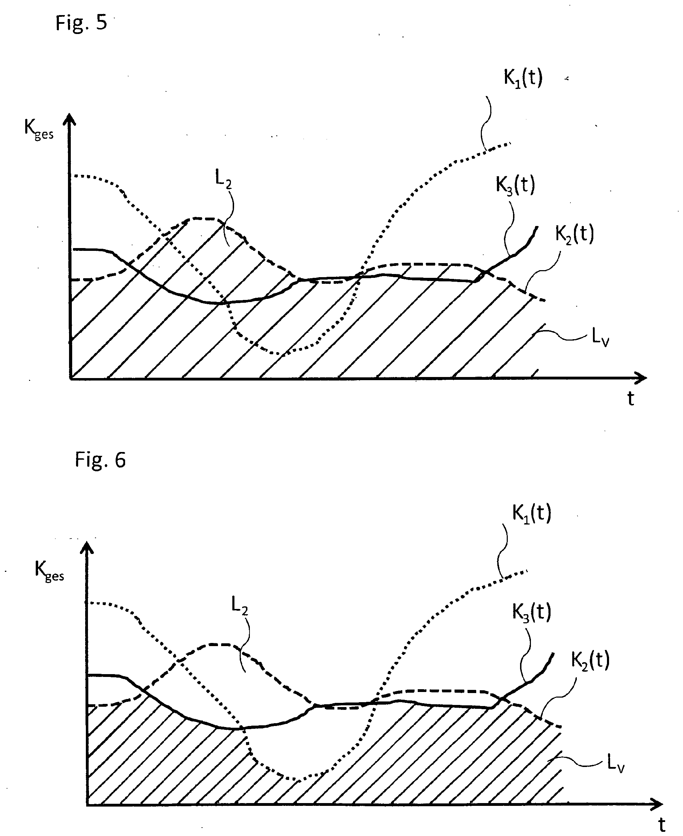

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2063191 A1
- EP 0108699 A1
- EP 2189729 A1